# EUROPÄISCHE PATENTSCHRIFT

(11) **EP 1 245 884 B1**
(45) Veröffentlichungstag und Bekanntmachung des Hinweises auf die Patenterteilung: **15.06.2005**
(21) Anmeldenummer: 01107405.1
(22) Anmeldetag: 26.03.2001
(51) Int. Cl.: F16L 5/06

(54) **Wanddurchführungssystem**
Leadthrough system for a wall
Système de traversée murale

(43) Veröffentlichungstag der Anmeldung: 02.10.2002
(73) Patentinhaber: Hawle Armaturen GmbH, 83395 Freilassing (DE)
(72) Erfinder: Katzenschwanz, Martin, 83416 Surheim (DE)
(74) Vertreter: Schwabe - Sandmair - Marx

(56) Entgegenhaltungen:
- DE-A- 3 928 632
- DE-C- 4 242 235
- US-A- 5 729 938

## Beschreibung

Die vorliegende Erfindung betrifft ein Wanddurchführungssystem, wie es beispielsweise zur Hindurchführung von Kabeln oder mediumführenden Rohren durch eine Hauswand zu Versorgungszwecken benötigt wird. Grundsätzlich dienen solche Systeme dazu, das Loch durch eine Wand bzw. eine Mauer, das zur Durchführung der elektrischen Versorgung, der Telefonversorgung sowie der Versorgung mit Gas und/oder Wasser dient, abzudichten, damit insbesondere zu verhindern, dass ein solches Loch in der Wand bzw. in der Mauer als Durchgangskanal - beispielsweise für gefährliches Gas - dienen kann.

Solche Wanddurchführungen (im Weiteren auch Mauerdurchführungen genannt) verfügen meist über ein Schutzrohr, das sich durch das Loch in der Wand bzw. Mauer hindurch erstreckt und in dessen Inneren die Medium- bzw. Kabelführungen laufen. Dieses Schutzrohr muss gegen das Wand- bzw. Mauerloch abgedichtet werden, und eine einfache Form dieser Abdichtung nach dem Stand der Technik besteht darin, um das Schutzrohr herum ringförmige Quetschdichtungen anzulegen, und zwar in der Umgebung beider Wanddurchbruchsöffnungen. Die Quetschdichtungen stülpen ihr Dichtungsmaterial nach dem Verquetschen nach außen und dichten damit zwischen Schutzrohr und Wand ab.

Schwerwiegende Nachteile solcher Quetschdichtungen liegen darin, dass sie bei Rohrverformungen (Kunststoffrohre) undicht werden können, und dass die Maueröffnungen um ihren Randbereich herum meist in ihrer Struktur geschwächt sind, also "bröselig" werden, und dadurch kann beispielsweise Gas, welches entlang des Leitungsverlaufes kriecht, aber auch Wasser, an den Lochrändern und den Quetschdichtungen vorbei durch die Maueröffnung hindurch gelangen.

Um dies zu vermeiden, sind Wanddurchführungssysteme entwickelt worden, welche aus einem Schutzrohr bestehen, dass länger ist als der Wanddurchbruch und an einer Seite einen festen Flansch aufweist, der an der Flanschwandseite Umfangsdichtungen aufweist, die gegen die Außenwand um das Loch des Durchbruches herum abdichten. Ferner ist zum Abdichten der anderen Wandseite ein Losflansch auf dem Schutzrohr vorgesehen, der eben solche Umfangsdichtungen aufweist und so auf dem Schutzrohr befestigt und vorgespannt werden kann, dass er gegen die Wand abdichtet. Der größte Nachteil dieses Systems ist seine geringe Flexibilität. Es ist nur als Einheit mit einem Schutzrohr mit Festflansch und einem zugeordneten Längsflansch erhältlich und deshalb entsprechend teuer, da es immer als gesamter Bausatz für verschieden große Wanddurchbrüche hergestellt werden muss. Ferner ist die Dichtigkeit nicht ausreichend gegeben; die Medien können bei einer Undichtigkeit noch immer außen am Rohr entlang durch den Wanddurchbruch gelangen. Die Größe der Flansche, zumindest des Festflansches ist fest vorgegeben und nicht an besondere Bausituationen anpassbar. Auch muss an das Ende des langen Schutzrohres ein Flansch angesetzt werden, wobei sich wiederum Dichtungsprobleme ergeben können (Anschlussproblematik).

Eine Wanddurchführung gemäß dem Oberbegriff des Anspruchs 1 ist aus der US-A-5,729,938 bekannt. Die DE 39 28 632 A1 beschreibt eine Einrichtung zur Wasser- und gasdichten Verlegung von Kabelrohren mit einer Flansch-Spannvorrichtung.

Es ist die Aufgabe der vorliegenden Erfindung, ein Wanddurchführungssystem bereitzustellen, das die oben aufgeführten Nachteile des Standes der Technik überwindet. Insbesondere soll ein flexibles und gut abdichtendes Wanddurchführungssystem geschaffen werden.

Diese Aufgabe wird gemäß der vorliegenden Erfindung durch eine Wanddurchführungsvorrichtung gemäß dem Patentanspruch 1 gelöst. Die Unteransprüche beschrieben bevorzugte Ausführungsformen der Erfindung.

Es wird also gemäß der Erfindung ein System mit zwei Losflanschen bereitgestellt, wodurch die Flexibilität und Anpassbarkeit an verschiedene Bausituationen erheblich verbessert wird. Die Flansche können in verschiedenen Innen- und Außendurchmesser hergestellt werden, was sehr viel kostengünstiger ist als die Herstellung ganzer Schutzrohre mit Festflanschen in verschiedenen Abmessungen. Die Losflansche können sozusagen als Zubehörteile für alle möglichen Rohre bereitgestellt werden, was die Flexibilität sehr erhöht. Mit unterschiedlichen Außendurchmessern, und zwar zum Beispiel auch für gleiche Innendurchmesser der Losflansche ist es möglich, die Umfangsdichtungen beispielsweise mit größerem Durchmesser auszugestalten, und so von Fehlstellen im Mauerwerk beim Durchbruch unabhängig dichten zu können. Die Anschlussproblematik bei der Rohrdurchführung wird gelöst und das Schutzrohr kann beispielsweise auch als ein Medium-Rohr, also insbesondere ein Gas- oder Wasserrohr verwendet werden.

Bei der erfindungsgemäßen Wanddurchführungsvorrichtung sind die Losflansche mit Hilfe von konischen Quetschringen auf dem Schutzrohr befestigbar und mit Hilfe einer Spannvorrichtung gegen die Wand andrückbar. Dadurch wird einerseits ein fester Halt auf dem Schutzrohr gewährleistet, was die Auszugssicherheit ergibt; andererseits wird die Dichtigkeit durch das feste Andrücken der Losflansche mit ihren Umfangsdichtungen gegen die Wand gewährleistet. Auf dem konischen Quetschring wird ein Haltestück getragen, das über das Schraubgewinde mit dem drehbaren Losflansch verbunden ist.

Ausgeführt werden kann eine solche Halterung bzw. Spannvorrichtung so, dass sie ein Schraubgewinde aufweist, welches bei einer Drehung eine Längsbewegung der Losflansche in Richtung auf die Wand bzw. in Gegenrichtung bewirkt.

Besonders vorteilhaft ist eine Ausgestaltung, bei der die Umfangsdichtungen auf einem dem Losflansch zugeordneten, diesem gegenüber drehbaren Dichtungsträger angeordnet sind, da hierbei durch das "Andrehen" des Losflansches an die Wand der Dichtungsträger nicht mitgedreht wird und somit sauber und glatt auf dem Mauerwerk aufsetzen kann.

Bei einer weiteren bevorzugten Ausführungsform weisen die Losflansche ferner Schutzrohrdichtungen auf, die zwischen dem Losflanschdurchgang für das Schutzrohr und Letzterem abdichten. Damit können auch noch diejenigen Medien zurückgehalten werden, die entlang des Schutzrohres durch die Wanddurchführung hindurchströmen könnten.

In bevorzugter Ausführungsform sind diese Schutzrohrdichtungen als Teil der Umfangsdichtungen ausgebildet, und außerdem können sie generell eine zum Schutzrohr hin abdichtende Umfangsdichtlippe aufweisen, die bevorzugt schräg auf das Schutzrohr zuläuft, und zwar so, dass sich der zulaufende Abschnitt entweder in Richtung zum Wanddurchbruch hin oder von diesem weg erstreckt. Die Lippe wird jeweils so schräg auf das Rohr aufsetzen, dass sie die beste Dichtungseigenschaft hat, also vorzugsweise mit dem zulaufenden Abschnitt zum Druckbereich hin gerichtet. Ferner kann eine "doppelte" Lippe bereitgestellt werden, die sich in beide Richtungen erstreckt.

Gemäß einer weiteren bevorzugten Ausführungsform umfasst die Schutzrohrdichtung eine Liniendichtung (zum Beispiel eine Art O-Ring-Dichtung), insbesondere ein im Fußbereich der Umfangsdichtlippe angeordnete, zusätzliche Liniendichtung (O-Ring-Dichtung).

Solch eine Liniendichtung (O-Ring-Dichtung) kann als linear abdichtendes Dichtelement die Abdichtung zum Schutzrohr hin weiter erhöhen, und zwar auch für solche Fälle, in denen aufgrund von Biegungen Probleme mit einer Dichtlippe entstehen könnten.

Die Erfindung wird im Weiteren anhand einer bevorzugten Ausführungsform näher erläutert. In den beiliegenden Zeichnungen zeigen:
- Figur 1: ein erfindungsgemäßes Wanddurchführungssystem mit zwei Losflanschen; und
- Figur 2: eine weitere Ausführungsform eines erfindungsgemäßen Wanddurchführungssystems mit Doppellippen-Schutzrohrabdichtung.

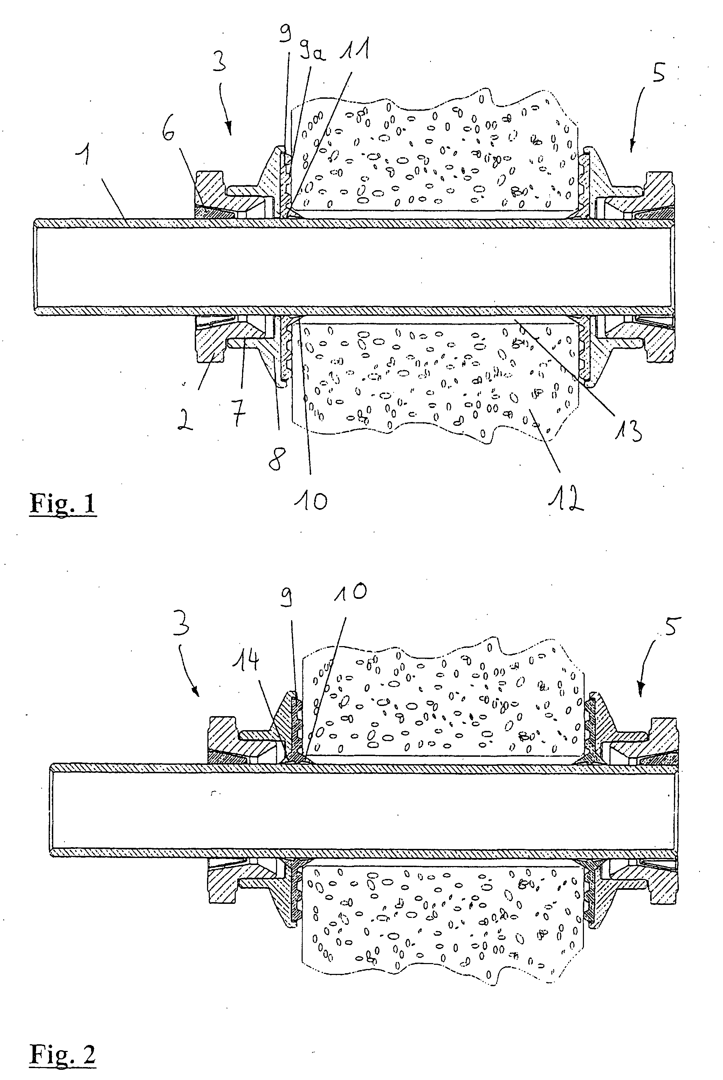

In der Figur 1 ist ein erfindungsgemäßes Wanddurchführungssystem im montierten Zustand an der Wand 12 gezeigt; ebenso in Figur 2 für eine andere Ausführungsform. Die Bezugszeichen sind in Figur 1 nur für den linken Losflansch 3 vorgesehen, sie gelten aber auch für den baugleichen rechten Losflansch und ebenso für die Figur 2.

Das Mauerdurchführungssystem ist an einem Wanddurchbruch 13 der Wand 12 angeordnet, und durch diesen Wanddurchbruch 13 erstreckt sich ein Schutzrohr 1. In diesem Schutzrohr können Leitungen für Wasser, Gas, Strom oder Telekomversorgung durch die Wand 12 hindurchgeführt werden, es kann aber auch selbst als mediumführendes Rohr verwendet werden.

Um zu verhindern, dass durch den Zwischenraum außerhalb des Rohres 1 im Wanddurchbruch 13 Gase oder Flüssigkeiten hindurchgehen, wird dieser mittels der beiden Losflansche 3 und 5 von beiden Seiten her abgedichtet, und außerdem dienen die Losflansche, die fest auf dem Rohr 1 sitzen, als Auszugssicherung gegen ein versehentliches Herausziehen des Schutzrohrs 1 aus der Wand (beispielsweise bei Baggereinsätzen).

Die Festlegung der Losflansche 3, 5 erfolgt über konisch ausgestaltete Quetschringe 6. Diese Quetschringe sind auf der Innenseite zum Rohr hin mit Reibungsverstärkungen ausgerüstet, und wenn das innen ebenfalls konisch ausgestaltete Haltestück 2 des Losflansches 3 durch eine längs-axial in Rohrrichtung wirkende Kraft auf den Konus des Quetschrings 6 in Richtung seiner höheren Seite aufgeschoben wird, werden sie unverrückbar am Rohr festgelegt. Das Haltestück 2 des Losflansches 3 kann deshalb, wenn es einmal nach links auf den Quetschring 6 aufgeschoben wurde, ebenfalls nicht mehr in dieser Richtung verrückt werden.

Das Haltestück 2 weist an seinem rechts dargestellten Ende ein Außengewinde 7 auf, über welches der Dichtungsträger 8 aufgeschraubt ist. Dieser Dichtungsträger 8 trägt an seiner zur Wand hin gerichteten flachen Stirnseite die Dichtung 9, die später noch eingehender beschrieben wird. An dieser Stelle soll aber erläutert werden, dass, wenn der Dichtungsträger 8 auf dem Gewinde 7 gedreht wird, eine axiale Längsbewegung zwischen Dichtungsträger 8 und Haltestück 2 entsteht, und da das Haltestück 2 längs fest auf dem Quetschring aufsitzt, wird der Dichtungsträger 8 nach rechts zur Wand hin solange verschoben, bis er fest an dieser über die Dichtung andrückt und damit an der Wandaußenseite abdichtet.

Ganz allgemein kann die Form der Dichtung 9 als eine Lochscheibenform bezeichnet werden, wobei im Außenbereich hervorstehende Wülste 9a zur Mauerseite hin vorgesehen sind, die als Ringabdichtungen an der Maueraußenseite dienen. In der dargestellten Ausführungsform sind drei Ringwülste 9a gezeigt, es können mehr, aber auch weniger vorhanden sein.

Am inneren Durchmesser der Dichtung 9 wird dann zusätzlich zur Wandabdichtung noch für die Abdichtung gegen das Schutzrohr gesorgt. Hierzu dient der senkrecht zum Schutzrohr hin gerichtete Dichtvorsprung 11, der eine umlaufende Liniendichtung ergibt und zusätzlich die schräg auf dem Rohr aufsitzende Lippe 10. Der Liniendichtungs-Wulst 11 stellt eine sehr zuverlässige Abdichtung gegen außen am Schutzrohr 1 entlang strömende Medien bereit, und zwar auch dann, wenn das Schutzrohr von außerhalb einer Biegung unterzogen wird, da solche Liniendichtungen auch bei Biegeverformungen noch sehr gut abdichten. Die Lippe 10 hat grundsätzlich den Vorteil, dass sie einen weiteren Abdichtungsring um das Schutzrohr herum bereitstellt. Zusätzlich wirkt sie aber noch in einer Richtung als Druckdichtung. Wenn bei dem Losflansch 3 nämlich ein Medium außen am Rohr entlang von der rechten Seite in der Zeichnung her unter höherem Druck einströmt, so wird die Lippe 10 nur noch fester an das Schutzrohr angepresst und kann auch in diesen Fällen eine sehr gute Abdichtung schaffen. Gleiches gilt natürlich umgekehrt auch für den rechten Losflansch 5.

Das Wanddurchführungssystem, das in Figur 2 im montierten Zustand dargestellt ist, gleicht bis auf die Dichtung 9 demjenigen, das in Figur 1 gezeigt ist. In der Ausführungsform nach Figur 2 ist die Dichtung 9 - dies wird im Allgemeinen eine Kunststoff- oder Gummidichtung mit elastischen Materialeigenschaften sein - an ihrem Fußende nicht nur mit einer, sondern mit zwei Lippen 10, 14 ausgestattet, die zu gegenüberliegenden Seiten auf dem Schutzrohr 1 aufsetzen. Damit steht diese Ausführungsform die oben genannte Druckabdichtung an jedern Flansch in beiden Richtungen zur Verfügung.

Wie schon oben beschrieben weist das erfindungsgemäße Wanddurchführungssystem erhebliche Vorteile bezüglich der Dichtigkeit und der Einsatzflexibilität auf. Als Beispiel sei hier nur angegeben, dass auf dasselbe Haltestück zwei jeweils ohne weitere Probleme Dichtungsträger und Dichtungen mit sehr unterschiedlichen Durchmessern aufgesetzt werden können, um Wanddurchbrüche mit den unterschiedlichsten Größen abzudichten.

## Patentansprüche

1. Wanddurchführungsvorrichtung mit einem Schutzrohr (1), in welchem ein gasförmiges oder flüssiges Medium oder Kabel bzw. mediumführende Rohre in einem Wanddurchbruch (13) geführt werden, mit zwei Wandanschlussflanschen (3, 5), die an ihrer der Wand zugewandten Seite zwischen Wand und Flanschwandseite Umfangsdichtungen (9) aufweisen, wobei beide Wandanschlussflansche (3, 5) als Losflansche ausgebildet sind, die am Schutzrohr (1) befestigbar sind, und wobei die Losflansche (3, 5) mit Hilfe von konischen Quetschringen (6) auf dem Schutzrohr (1) befestigbar sind und mit Hilfe einer Spannvorrichtung (7) gegen die Wand andrückbar sind, **dadurch gekennzeichnet, dass** auf dem konischen Quetschring (6) ein Haltestück (2) getragen wird, das über ein Schraubgewinde (7) mit einem drehbaren Losflansch-Dichtungsträger (8) verbunden ist.

2. Wanddurchführungsvorrichtung nach Anspruch 1, **dadurch gekennzeichnet, dass** die Spannvorrichtung ein Schraubgewinde (7) aufweist, welches bei einer Drehung eine Längsbewegung der Losflansche (3, 5) in Richtung auf die Wand bzw. in Gegenrichtung bewirkt.

3. Wanddurchführungsvorrichtung nach einem der Ansprüche 1 oder 2, **dadurch gekennzeichnet, dass** die Umfangsdichtungen (9) auf einem dem Losflansch (3, 5) zugeordneten, diesem gegenüber drehbaren Dichtungsträger (8) angeordnet sind.

4. Wanddurchführungsvorrichtung nach einem der Ansprüche 1 bis 3, **dadurch gekennzeichnet, dass** die Losflansche (3, 5) ferner Schutzrohrdichtungen (10, 11, 14) aufweisen, die zwischen dem Losflanschdurchgang für das Schutzrohr (1) und letzterem abdichten.

5. Wanddurchführungsvorrichtung nach Anspruch 4, **dadurch gekennzeichnet, dass** die Schutzrohrdichtungen (10, 11, 14) als Teil der Umfangsdichtungen (9) ausgebildet sind.

6. Wanddurchführungsvorrichtung nach Anspruch 4 oder 5, **dadurch gekennzeichnet, dass** die Schutzrohrdichtungen mindestens eine zum Schutzrohr (1) hin abdichtende Umfangsdichtlippe (10, 14) aufweisen, die bevorzugt schräg auf das Schutzrohr (1) zuläuft, und zwar so, dass sich der zulaufende Abschnitt entweder in Richtung zum Wanddurchbruch hin oder von diesem weg oder in beide Richtungen erstreckt.

7. Wanddurchführungsvorrichtung nach einem der Ansprüche 4 bis 6, **dadurch gekennzeichnet, dass** die Schutzrohrdichtung eine umlaufende Liniendichtung (11) umfasst, insbesondere eine im Fußbereich der Umfangsdichtlippe (10, 14) angeordnete, zusätzliche Liniendichtung.

## Claims

1. A wall bushing device, comprising a protective pipe (1) in which a gaseous or liquid medium or cables and/or medium-guiding pipes are guided in a wall aperture (13) having two wall connecting flanges (3, 5) which comprise circumferential seals (9) on their side facing the wall, between the wall and the flange wall side, wherein both wall connecting flanges (3, 5) are formed as loose flanges which can be fastened to the protective pipe (1), and wherein the loose flanges (3, 5) can be fastened on the protective pipe (1) with the aid of conical crimp rings (6) and can be pressed against the wall with the aid of a clamping device (7), **characterised in that** a holding piece (2) is supported on the conical crimp ring (6) and is connected to a rotatable loose flange seal support (8) via a screw thread (7).

2. The wall bushing device as set forth in claim 1, **characterised in that** the clamping device comprises a screw thread (7) which when rotated causes the loose flanges (3, 5) to move longitudinally towards the wall and/or in the opposite direction.

3. The wall bushing device as set forth in any one of claims 1 or 2, **characterised in that** the circumferential seals (9) are arranged on a seal support (8) which is assigned to the loose flange (3, 5) and can be rotated relative to the loose flange (3, 5).

4. The wall bushing device as set forth in any one of claims 1 to 3, **characterised in that** the loose flanges (3, 5) further comprise protective pipe seals (10, 11, 14) which form a seal between the protective pipe (1) and the loose flange passageway for the protective pipe (1).

5. The wall bushing device as set forth in claim 4, **characterised in that** the protective pipe seals (10, 11, 14) are formed as part of the circumferential seals (9).

6. The wall bushing device as set forth in claim 4 or 5, **characterised in that** the protective pipe seals comprise at least one circumferential sealing lip (10, 14) which forms a seal towards the protective pipe (1) and preferably tapers obliquely towards the protective pipe (1), such that the tapering section extends either towards the wall aperture or away from the wall aperture or in both directions.

7. The wall bushing device as set forth in any one of claims 4 to 6, **characterised in that** the protective pipe seal includes a circumferential linear seal (11), in particular an additional linear seal arranged in the foot region of the circumferential sealing lip (10, 14).

## Revendications

1. Dispositif de traversée murale avec un tube de protection (1), dans lequel un fluide gazeux ou liquide ou un câble respectivement des tubes transportant un fluide sont menés dans une traversée murale (13), avec deux brides de raccordement mural (3, 5) qui présentent, entre le mur et le côté mural de la bride, des garnitures d'étanchéité périphériques (9) sur leur côté orienté vers le mur, dans lequel les deux brides de raccordement mural (3, 5) sont des brides libres qui peuvent être fixées au tube de protection (1), et dans lequel les brides libres (3, 5) peuvent être fixées sur le tube de protection (1) à l'aide de bagues de serrage coniques (6) et peuvent être pressées contre le mur à l'aide d'un dispositif de blocage (7), **caractérisé en ce qu'**une pièce de maintien (2) est portée sur la bague de serrage conique (6), pièce qui est assemblée à un support rotatif (8) de la garniture d'étanchéité de la bride libre par un pas de vis (7).

2. Dispositif de traversée murale selon la revendication 1, **caractérisé en ce que** le dispositif de blocage présente un pas de vis (7), qui provoque par rotation un mouvement longitudinal des brides libres (3, 5) en direction du mur respectivement en direction opposée.

3. Dispositif de traversée murale selon l'une quelconque des revendications 1 ou 2, **caractérisé en ce que** les garnitures d'étanchéité périphériques (9) sont disposées sur un support de garniture d'étanchéité (8) associé à la bride libre (3, 5) et pouvant tourner par rapport à celle-ci.

4. Dispositif de traversée murale selon l'une quelconque des revendications 1 à 3, **caractérisé en ce que** les brides libres (3, 5) présentent en outre des garnitures d'étanchéité (10, 11, 14) du tube de protection, qui assurent l'étanchéité entre le passage des brides libres pour le tube de protection (1) et ce dernier.

5. Dispositif de traversée murale selon la revendication 4, **caractérisé en ce que** les garnitures d'étanchéité (10, 11, 14) du tube de protection sont une partie des garnitures d'étanchéité périphériques (9).

6. Dispositif de traversée murale selon la revendication 4 ou 5, **caractérisé en ce que** les garnitures d'étanchéité du tube de protection présentent au moins une lèvre d'étanchéité périphérique (10, 14) assurant l'étanchéité vers le tube de protection (1), qui se termine de préférence en oblique sur le tube de protection (1), notamment de telle façon que la partie terminale s'étende soit en direction de la traversée murale soit en direction opposée à celle-ci soit encore dans les deux directions.

7. Dispositif de traversée murale selon l'une quelconque des revendications 4 à 6, **caractérisé en ce que** la garniture d'étanchéité du tube de protection comprend une garniture d'étanchéité linéaire périphérique (11), en particulier une garniture d'étanchéité linéaire supplémentaire disposée dans la région du pied de la lèvre d'étanchéité périphérique (10, 14).
